# EUROPEAN PATENT APPLICATION

(11) **EP 1 326 454 A1**
(43) Date of publication of application: **09.07.2003**
(21) Application number: 02290027.8
(22) Date of filing: 08.01.2002
(51) Int. Cl.: H04Q 7/22, H04L 12/56

(54) **Methods for dynamik downlink allocation in mobile communications systems**

(71) Applicant: MOTOROLA, INC., Schaumburg, IL 60196 (US)
(72) Inventor: Abdesselem, Ouelid, Toulouse 31000 (FR); Fouilland, Pascal, Tournefeuille 31170 (FR); Peurichard, Philippe, Toulouse 31100 (FR)
(74) Representative: Wharmby, Martin Angus

(57) **Abstract**

A method in a data network in communication with mobile stations operating in transfer block flow mode. The network transmits a first data block (310) having a first recipient identifier in a first transmission position, the first recipient identifier indicating to the mobile station the recipient of the first data block and the recipient of one or more subsequent data blocks in subsequent transmission positions.

## Description

### FIELD OF THE INVENTIONS

The present inventions relate generally to communications systems, and more particularly to transfer block flow mode communications and methods therefore.

### BACKGROUND OF THE INVENTIONS

In GPRS/EGPRS communications systems, as many as 32 mobile stations are multiplexed on the same downlink time-slot. Generally, each frame includes many time slots, for example in GSM communication systems there are 8 time-slots per frame. The network assigns mobile stations operating in Transfer Block Flow (TBF) mode to several time slots in each frame for receiving downlink signals. In GSM systems, 4 time slots generally provides reasonable throughput. The mobile stations use other time-slots for uplink transmissions and neighbor cell monitoring.

In GPRS/EGPRS communications systems, each data block or packet includes a transfer flow indicator (TFI) identifying the intended recipient, or addressee, of that particular block. Each block is transmitted in 4 bursts over 4 frames, wherein each burst is in a corresponding time-slot of each frame. In existing GPRS communications system architectures, all the mobile stations must decode each downlink data block to determine to which mobile station the block is addressed. In existing EGPRS communications systems, the mobile stations must decode at least the header portion of each downlink data block to determine the addressee of the data block.

The various aspects, features and advantages of the present invention will become more fully apparent to those having ordinary skill in the art upon careful consideration of the following Detailed Description of the Invention with the accompanying drawings described below.

### BRIEF DESCRIPTION OF THE DRAWINGS

FIG. 1 is an exemplary packet mode communication system.
FIG. 2 is a tabular illustration of a GPRS/EGPRS data block encoding scheme.
FIG. 3 illustrates an exemplary series of data block addressed to different mobile stations.
FIG. 4 is a tabular illustration of increases in mobile station battery life for exemplary system configurations.
FIG. 5 illustrates another exemplary series of data block addressed to different mobile stations.
FIG. 6 is another tabular illustration of increases in mobile station battery life for exemplary system configurations.
FIG. 7 illustrates another exemplary series of data block addressed to different mobile stations.
FIG. 8 illustrates yet another exemplary series of data block addressed to different mobile stations.
FIG. 9 is another tabular illustration of increases in mobile station battery life for exemplary system configurations.
FIG. 10 is yet another tabular illustration of increases in mobile station battery life for exemplary system configurations.

### DETAILED DESCRIPTION OF THE INVENTIONS

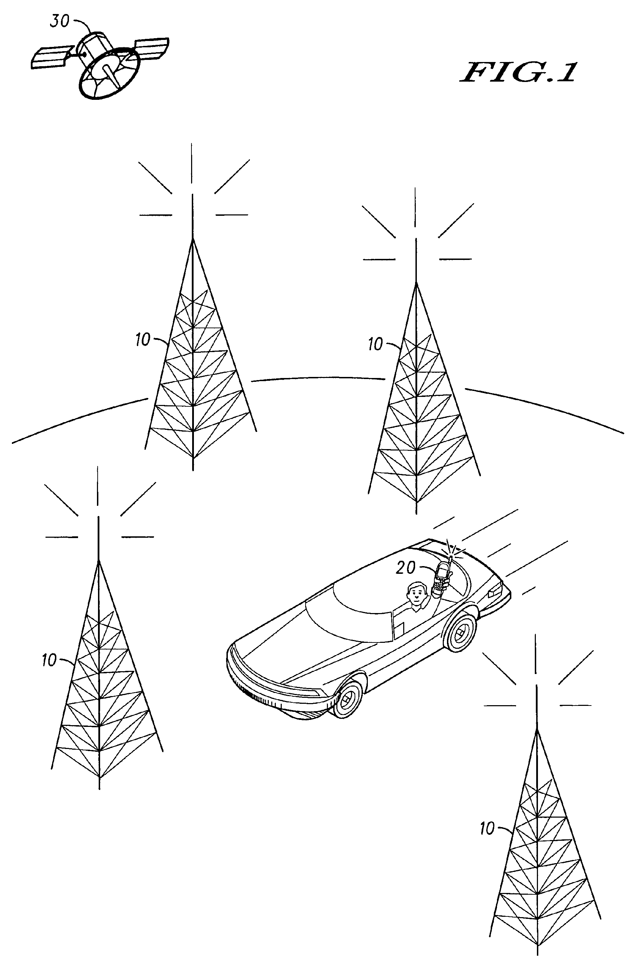

In FIG. 1, the communication system comprises generally, a network of fixed base stations 10 for communicating with one or more mobile stations 20, some of which are operable in transfer block flow (TBF) mode, which is also referred to herein as data block or packet mode. The network infrastructure may also include other types of base stations, including for example orbital based or satellite communications elements 30. Communications networks of this type are known, and include for example GPRS and EGPRS data communications networks.

In one embodiment, in a data network that communicates with at least one mobile station operating in transfer block flow mode, a first data block is transmitted from the network, for example from a base station thereof, in a first transmission position. The first data block includes a first recipient identifier indicating the recipient of the first data block. The first data block also includes recipient information for a second transmission position, following the first transmission position.

One or more mobile stations receiving the first data block determine the intended recipient of the first data block by decoding the first data block recipient identifier thereof. The mobile stations may also obtain information about one or more subsequent transmission positions, following the first transmission position, by decoding subsequent transmission recipient information of the first data block. The mobile station may determine, for example, whether a second data block in a second transmission position is addressed to the same recipient as the first data block.

In one embodiment, the recipient identifier and the subsequent transmission recipient identifier is encoded in a header portion of the data block, although in other embodiments it may be located elsewhere therein. In the exemplary GPRS/EGPRS application, the existing RRBP field is encoded when available to provide information about subsequent data blocks, but in other embodiments other existing fields may be used, or alternatively new fields may be defined specifically for this purpose.

In one embodiment, if the mobile station is unable to decode one data block and thus unable to know the subsequent transmission recipient identifier, the mobile station decodes systematically the data block in the subsequent transmission position.

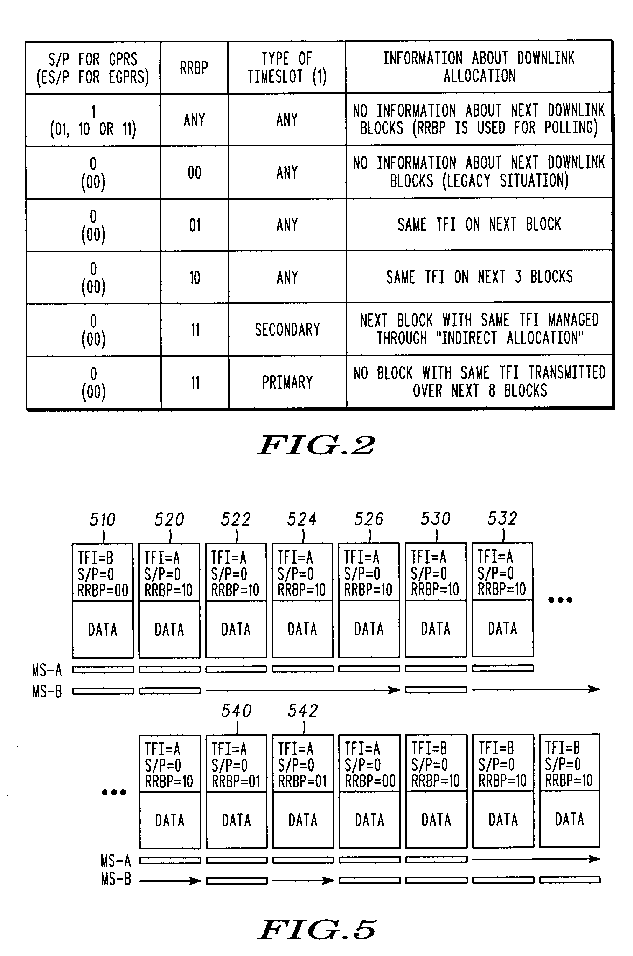

In GPRS and EGPRS communications systems, the recipient identifier is the transfer flow indicator (TFI). FIG. 2 illustrates in tabular form an exemplary scheme for encoding GPRS and EGPRS data blocks to provide subsequent transmission recipient identifier information. For GPRS systems, the exemplary scheme utilizes the existing RRBP field when the field S/P = 0. For EGPRS schemes, the exemplary scheme utilizes the existing RRBP field when the field ES/P = 00. In FIG. 2, when S/P = 1 in a GPRS system (or when ES/P= 01 or 10, or 11 in an EGPRS system), the RRBP filed does not convey any information about subsequent data blocks in subsequent transmission positions. Under these circumstances the RRBP field is used for another purposes, for example polling.

In the exemplary scheme of FIG. 2, information about subsequent data blocks is conveyed by encoding the RRBP field only when S/P =0 in the GPRS system, or when ES/P =00 in the EGPRS system. In FIG. 2, for example, when RRBP=00, no information is conveyed about subsequent data blocks. When RRBP=01, the indication is that the transfer flow indicator (TFI) on the next data block in the next transmission position is the same as the TFI on the data block conveying the RRBP=01 data. When RRBP=10, the TFI on the next three data blocks in the next three transmission positions is the same as the TFI on the data block conveying the RRBP=10 data. With this information, a mobile station can determine whether it is necessary to decode one or more subsequent data blocks upon decoding the RRBP field in a first data block, thus enabling the mobile station to conserve resources, particularly battery power if the one or more subsequent data blocks are not addressed to it.

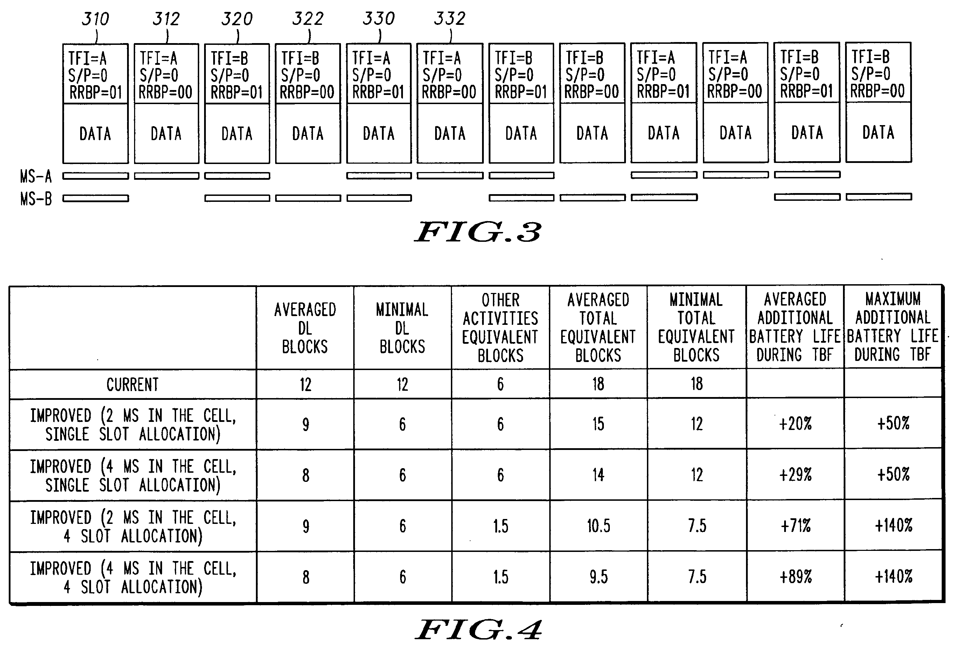

In FIG. 3, the first data block 310 is addressed to mobile station (MS) A by setting TFI=A. In data block 310, RRBP=01, which in the exemplary embodiment indicates that the next data block 312 is also addressed to the MS-A (TFI=A). Thus all other mobile stations, for example mobile station B, that read data block 310, or at least the S/P and RRBP fields thereof, will be informed that the next data block 312 is addressed to another mobile station, MS-A (TFI=A). Thus in FIG. 3, other mobile stations, for example MS-B need not decode data block 312, since it is known in advance that data block 312 is addressed to another mobile station. After the transmission of data block 312, all mobile stations resume decoding subsequent data blocks. In FIG. 3, Both mobile stations MS-A & MS-B decode data block 320, but only mobile station B decodes data block 322, since RRBP=01 in data block 320 indicates that the data block 322 is addressed to the same mobile station as data block 320, i.e., TFI=B in both data blocks 320 and 322.

In a exemplary GPRS system, on a 52-multiframe, apart from downlink data blocks, 2 bursts are read for downlink PTCCH, 0.125 bursts transmitted for uplink PTCCH (1 burst every 16 PTCCH/U occurrences), 52 neighbor cell measurements, and 2 windows opened for neighbor BSIC decoding. This additional activity represents approximately the decoding of 6 downlinks blocks. FIG. 4 illustrates the data blocks monitored per time slot by a mobile station (MS) during a 52-multiframe. Assuming that 4 receive time-slots are allocated to each mobile station, FIG. 4 illustrates that battery life in transfer block flow mode is increased by as much as + 140 %, depending on the actual number of data block transmitted to the mobile station.

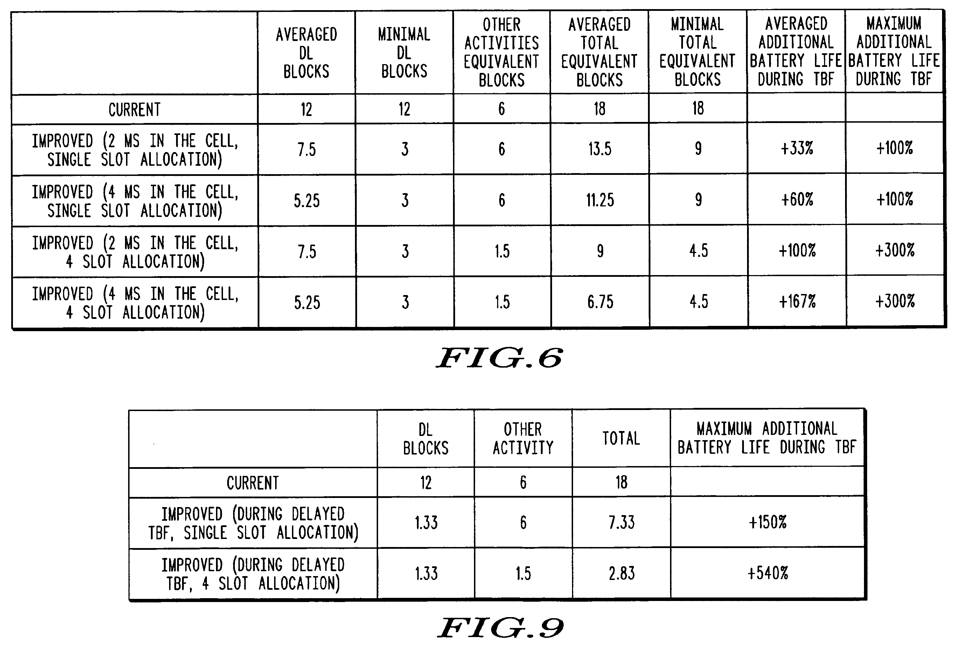

In FIG. 5, the first data block 510 is addressed to MS-B (TFI=B), and RRBP=00, which in the exemplary embodiment indicates nothing about the recipient of the next data block 512, as discussed above in connection with FIG. 2. Thus all mobile stations, MS-A & MS-B in FIG. 5, decode both data blocks 510 and 520. In data block 520, RRBP=10, which indicates that the next three data blocks 522, 524 and 526 have the same recipient as data block 520. Since data block 520 is addressed to MS-A, it is unnecessary for MS-B and any other mobile stations to decode data blocks 522, 524 and 526. Thereafter, all mobile stations decode data block 530, which is addressed to MS-A (TFI=A) and has RRBP=10. It is therefore unnecessary for mobile station B and all other mobile stations to decode the next three subsequent data blocks beginning with data block 532. In FIG. 5, mobile stations A & B both decode data block 540, which is addressed to MS-A (TFI=A) and has RRBP=01, which indicates that the next data block 542 is also addressed to mobile station A. Thus it is unnecessary for other mobile stations, including mobile station B, to decode data block 542.

In the exemplary GPRS system with an allocation by groups of 4 blocks, FIG. 6 illustrates the number of data blocks monitored by an MS during a 52-multiframe. Assuming, for example, that 4 receive time-slots are allocated to the mobile station, the additional battery life in transfer block flow mode is increased by as much as + 300 %, depending on the actual number of data blocks transmitted toward the mobile station.

The RRBP field or more generally some other field of the data block may also be encoded to indicate that one or more subsequent second transmission positions, or data blocks therein, are not addressed to the same recipient as the first data block. Also, in some embodiments, the one or more time slots that a particular mobile station should monitor are indicated with information provided in a data block on a primary or secondary time slot. The primary time slot corresponds generally to an uplink time slot on which the network polls the particular mobile station. In some embodiments, for example, the data block may indicate that the mobile station is no longer required to monitor at least the time slot on which the data block is transmitted, or the data block may indicate that the mobile station should monitor at least the primary time slot.

In FIG. 2, for example, when S/P=0 or when ES/P=00, RRBP=11 on a secondary channel, for example a non-PACCH-UL time-slot, indicates that the mobile station to which the first data block is addressed may discontinue decoding subsequent data blocks on one or more secondary channels. The discontinued decoding of data blocks on the secondary channels by the mobile station may occur for a specified number of data blocks or until indicated otherwise, as discussed more fully below.

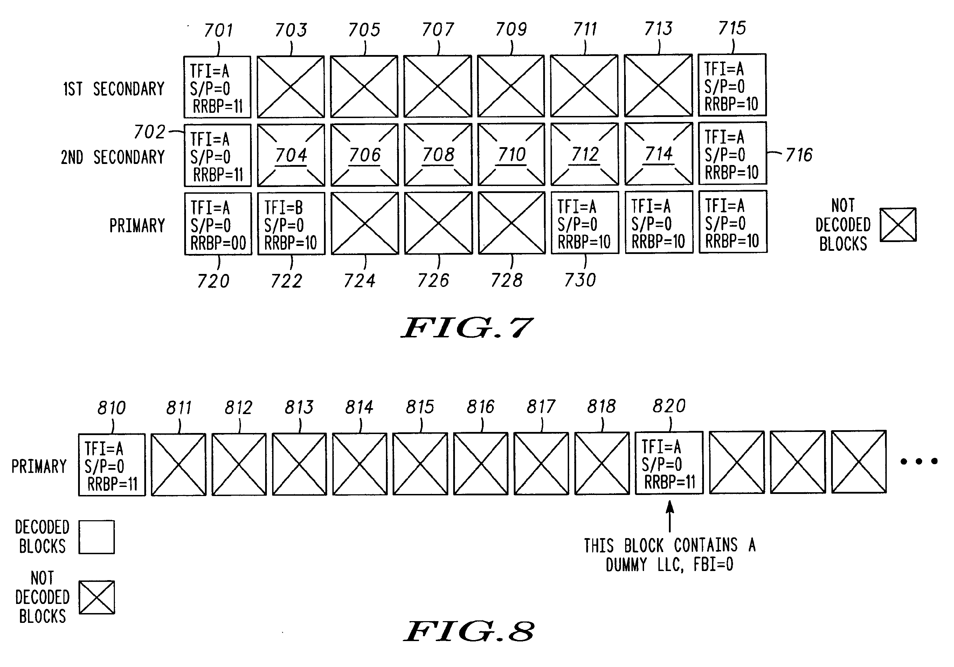

In FIG. 7, data block 702 and 704 on first and second secondary channels are addressed to MS-A (TFI=A) and RRBP=11, which indicates that MS-A may discontinue decoding data block on the first and second channels. Particularly, in FIG. 7, MS-A does not decode subsequent data blocks 703, 705, 707, 709, 711 and 713 on the first channel upon receipt of the first data block 701. MS-A does not decode data blocks 704, 706, 708, 710, 712 and 714 on the second secondary channel upon receipt.

In FIG. 7, on a primary channel, data block 720, which is transmitted concurrently with data blocks 701 and 702 on the secondary channels, is addressed to MS-A (TFI=A) and RRBP=00, which according to FIG. 2 provides no information about subsequent data blocks. The next data block 722 on the primary channel is addressed to MS-B and has RRBP=10, which indicates according to FIG. 2 that the next three data blocks are addressed to MS-B. MS-A thus does not decode the next three data blocks 724, 726 and 728 on the primary channel.

In FIG. 7, MS-A does not decode data blocks on the first and second secondary channels until the mobile station receives an indication on a primary channel that subsequent data blocks may be addressed to it on the secondary channels. On the primary channel, data block 730 is addressed to MS-A (TFI=A), which according to one embodiment of the invention prompts MS-A to begin decoding on all channels. Particularly, in FIG. 7, MS-A begins decoding data blocks 715 and 716 on the first and second secondary channels, respectively, after a latency period, which is generally required for the radio hardware to resume operation. On the primary channel, data block 730 has RRBP=10, which according to FIG. 2 indicates that the next three data blocks are also addressed to MS-A.

In another embodiment, in FIG. 2, when S/P=0 or when ES/P=00, RRBP=11 on a primary channel, for example a PACCH-UL time-slot, the mobile station to which the first data block is addressed may discontinue decoding 8 subsequent data blocks on the primary channel. In other embodiments, the specified number of data block may be other than 8. In FIG. 8, data block 810 on the primary time slot is addressed to MS-A (TFI=A) and has RRBO=11, which according to FIG. 2 indicates that the next 8 data blocks on the primary time slot are not addressed to MS-A. MS-A may thus discontinue decoding the next 8 data blocks 811-818 on the primary time slot upon decoding data block 810. Thereafter MS-A decodes the subsequent data block 820, which again indicates that the next 8 data blocks are not addressed to MS-A.

Exemplary modes of operation where the mobile station may monitor only 1 data block out of every 9 data blocks include when the mobile station is in transfer block flow mode, even though few or no downlink data has been sent, e.g. during delayed TBF release phase or a T3192 period, or when RLC window is stalled, or when the quality of service (QoS) indicates less priority for a particular mobile station.

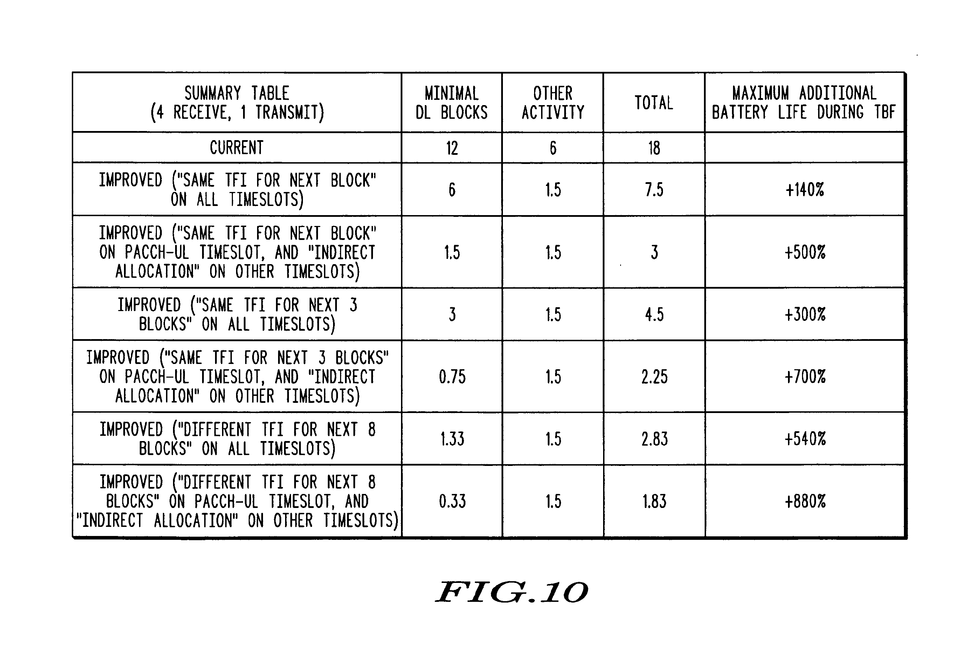

FIG. 9 illustrates the number of data bock monitored by a mobile station during a 52-multiframe and the battery life improvement where the mobile station decodes 1 out of every 9 data blocks.

FIG. 10 illustrates battery life improvement for a Class 12 mobile station that has been allocated 4 downlink timeslots, i.e., 1 PACCH-UL time-slot and 3 PACCH-UL time-slots, due to indirect allocation compared to current power consumption and compared to direct allocations.

In FIG. 8, the data block 820 is devoid of data and includes only header information for providing information about subsequent data blocks. That is typically the case when there is not much downlink traffic, so the network may have no data to transmit at a given point of time on a given channel. Under these circumstances, the network adds dummy data blocks with header information only, and without data content, in order to improve the battery life of mobile stations in TBF mode. Particularly, the data block 820 includes the TFI field data and the RRBP field data when the S/P=0 or when the ES/P=00. In one embodiment, an indication is provided to a particular mobile station that it will receive subsequent data blocks on a particular time slot with the header information of a data block on the corresponding time slot by addressing the data block to the mobile station. In another embodiment, an indication is provided in the data block that a plurality of mobile stations will not receive subsequent data blocks on a particular time slot by addressing a data block sent on the corresponding time slot to a different mobile station, which may even not actually exist. Generally, any of the data blocks on either primary or secondary time-slots may be devoid of data and contain only data fields, for example header data fields, for providing information about subsequent data blocks.

The communications network preferably schedules the consecutive transmission of a plurality of data blocks addressed to the same mobile station in transfer block flow mode, thus improving downlink capacity and mobile station battery life. The encoding of the data blocks with information about subsequent data blocks occurs at the network prior to transmission.

While the present inventions and what is considered presently to be the best modes thereof have been described in a manner that establishes possession thereof by the inventors and that enables those of ordinary skill in the art to make and use the inventions, it will be understood and appreciated that there are many equivalents to the exemplary embodiments disclosed herein and that myriad modifications and variations may be made thereto without departing from the scope and spirit of the inventions, which are to be limited not by the exemplary embodiments but by the appended claims.

## Claims

1. A method in a data network that communicates with at least one mobile station operating in transfer block flow mode, comprising transmitting a first data block (310, 510, 810) in a first transmission position, the first data block having a first recipient identifier, the first recipient identifier indicating the recipient of the first data block, **characterizing**
providing recipient information for a second transmission position, following the first transmission position, with subsequent transmission position information in the first data block.

2. The method of Claim 1, providing recipient information by indicating that at least a second data block in the second transmission position is addressed to the same recipient as the first data block.

3. The method of Claim 1, providing recipient information by indicating that at least two subsequent data blocks in corresponding subsequent transmission positions, next consecutive with the first transmission position, are addressed to the same recipient as the first data block.

4. The method of Claim 1, providing recipient information by encoding the subsequent transmission position information in an RRBP field of the first data block.

5. The method of Claim 1, providing recipient information by indicating that the second transmission position is not addressed to the same recipient as the first data block.

6. The method of Claim 1, providing recipient information by indicating that at least two subsequent data blocks in corresponding subsequent transmission positions, next consecutive with the first transmission position, are not addressed to the same recipient as the first data block.

7. A method in a data network that communicates with at least one mobile station operating in transfer block flow mode, comprising transmitting on a plurality of time slots, at least one of the plurality of time slots is a primary time slot transmitting a first data block (720) in the primary time slot, **characterizing**:
indicating which time slots a particular mobile station should monitor with information in the first data block in the primary time slot.

8. The method of Claim 7, indicating that the particular mobile station should monitor more time slots than the primary time slot by addressing the first data block to the particular mobile station.

9. The method of Claim 8, compensating for decoding latency in the particular mobile station by transmitting the first data block before transmitting any data blocks that are addressed to the particular mobile station.

10. The method of Claim 7, the primary time slot corresponds to an uplink time slot on which the network polls the particular mobile station, indicating which time slot the particular mobile station should monitor by addressing the data block to the particular mobile station and encoding the information in an RRBP field of the first data block.

11. A method in a data network that communicates with at least one mobile station operating in transfer block flow mode, comprising transmitting on a plurality of time slots including primary and secondary time slots, transmitting a first data block (701, 702) in the secondary time slot, the first data block addressed to a particular mobile station, **characterizing**, indicating which time slots the particular mobile station should monitor with information in the first data block in the secondary time slot.

12. The method of Claim 11, indicating that the mobile station is no longer required to monitor at least the secondary time slot on which the first data block is transmitted.

13. The method of Claim 11, indicating that the mobile station should monitor at least the primary time slot.

14. A method in a data network that communicates with at least one mobile station operating in transfer block flow mode, comprising transmitting a data block (820) on a time slot, the data block having header information, **characterizing**:
the data block devoid of data;
indicating whether a mobile station will receive a subsequent data block on the time slot with the header information of the first data block.

15. The method of Claim 14, indicating that the mobile station will receive subsequent data blocks on the time slot with the header information of the first data block by addressing the data block to the mobile station.

16. The method of Claim 14, indicating that a plurality of mobile stations will not receive subsequent data blocks on the time slot by addressing the data block to another mobile station.

17. The method of Claim 14, indicating that a plurality of mobile stations will not receive subsequent data blocks on the time slot by addressing the data block to a mobile station that does not actually exist.

18. A method in a data network that communicates with at least one mobile station in transfer block mode, comprising scheduling transmission of data blocks addressed to at least one mobile station in transfer block mode, characterzing:
providing information in at least one data block about the recipient of at least one other data block;
transmitting the data block with information about the other data block before transmitting the other data block.

19. The method of Claim 18, scheduling transmission of data blocks by scheduling consecutive transmission of a plurality of at least two data blocks addressed to the same recipient, providing information in a first of the plurality of at least two data blocks addressed to the same recipient indicating a remaining number of data blocks addressed to the same recipient.

20. A method in a data network that communicates with at least one mobile station, comprising:
determining that first and second data blocks are intended for the same recipient before transmitting the first and second data blocks;
providing an indicator in the first data block that the second data block is intended for the same recipient as the first data block before transmitting the first data block;
transmitting the first data block and consecutively transmitting the second data block.

21. The method of Claim 20, providing the indicator by encoding the indicator in an RRBP field of the first data block.

22. A method in a data network that communicates with at least one mobile station, comprising:
determining that first and second data blocks are not intended for the same recipient before transmitting the first and second data blocks;
providing an indicator in the first data block that the second data block is not intended for the same recipient as the first data block before transmitting the first data block;
transmitting the first data block and consecutively transmitting the second data block.

23. The method of Claim 22, providing the indicator by encoding the indicator an RRBP field of the first data block.

24. A method in a mobile station operating in transfer block flow mode, comprising:
receiving a first data block transmitted in a first transmission position;
determining an intended recipient of the first data block by decoding a first data block recipient identifier of the first data block;
obtaining information about a second transmission position, following the first transmission position, by decoding subsequent transmission recipient information of the first data block.

25. The method of Claim 24, not decoding of a data block on the second transmission
position if the data block transmitted on the second data block is not addressed to the mobile station.

26. The method of Claim 25, decoding the data block on the second transmission position if the data block transmitted on the first transmission position was not decoded.

27. The method of Claim 24, the first data block recipient identifier is a transfer flow indicator field of the first data block, obtaining information about the second transmission position by decoding subsequent transmission recipient information encoded in an RRBP field of the first data block.

28. The method of Claim 24, determining that any data block in the second transmission position has the same intended recipient as the first data block by decoding the subsequent transmission recipient information of the first data block.

29. The method of Claim 24, determining that any data block in the second transmission position is not addressed to the same recipient as the first data block by decoding the subsequent transmission recipient information of the first data block.

30. A method in a mobile station operating in transfer block flow mode, comprising:
receiving on a plurality of time slots, at least one of the plurality of time slots is a primary time slot;
receiving a first data block in the primary time slot;
determining which of the plurality of time slots to monitor based on information in the first data block.

31. The method of Claim 30, determining which of the plurality of time slots to monitor by decoding information in an RRBP field of the first data block.

32. The method of Claim 30, monitoring more time slots than the primary time slot in response to the first data block being addressed to the mobile station.

33. A method in a mobile station operating in transfer block flow mode, comprising:
receiving a data block on a time slot,
the data block having header information, the data block devoid of data;
determining whether a subsequent data block on the same time slot will be addressed to the mobile station based on the header information of the first data block.

34. The method of Claim 33, determining that the mobile station will receive subsequent data blocks on the same time slot based upon the first data block being addressed to the mobile station.

35. The method of Claim 33, determining that the mobile station will not receive subsequent data blocks on the same time slot based upon the first data block being addressed to another mobile station.

36. A method in a mobile station operating in transfer block mode, comprising:
receiving first and second data blocks at a particular mobile station;
decoding information in the first data block indicating whether the second data block is intended for the same recipient as the first data block;
receiving and decoding the second data block at the particular mobile station only if the first data block indicates that the second data block is addressed to the particular mobile station.
